# DEMANDE DE BREVET EUROPEEN

(11) **EP 4 745 541 A1**
(43) Date de publication de la demande: **20.05.2026**
(21) Numéro de dépôt: 25216728.3
(22) Date de dépôt: 18.11.2025
(51) Int. Cl.: G01J 3/10, G01N 21/31, G01N 21/64, G02F 1/01

(54) **DISPOSITIF D'ILLUMINATION SPATIALEMENT MODULÉE**

(30) Priorité: 19.11.2024 FR 2412661
(71) Demandeur: Commissariat à l'Energie Atomique et aux Energies Alternatives, 75015 Paris (FR)
(72) Inventeur: MERMET, Xavier, 38054 GRENOBLE CEDEX 09 (FR); VAILLANT, Jérôme, 38054 GRENOBLE CEDEX 09 (FR); RACINE, Benoît, 38054 GRENOBLE CEDEX 09 (FR)
(74) Mandataire: INNOV-GROUP

(57) **Abrégé**

Dispositif (1) d'illumination d'un objet (3), le dispositif étant configuré pour être éclairé par une source de lumière (2), et comportant :
- un photodétecteur (10) , comportant des pixels de détection (10ᵢ);
- une modulateur (20), formé d'une matrice de pixels de modulation (20ᵢ), interposé entre la source de lumière et le photodétecteur pixelisé, chaque pixel de modulation comportant un matériau dont une propriété optique varie en fonction d'une commande électrique;
- une unité de commande (30), configurée pour activer chaque pixel de modulation en fonction d'une intensité de lumière détectée par les pixels de détection ;
le dispositif étant caractérisé en ce que :
- la surface du photodétecteur transmet une partie de la lumière, de façon que la lumière transmise par le photodétecteur pixelisé illumine l'objet ;
- de façon que le dispositif est configuré pour être disposé entre la source de lumière et l'objet.

## Description

### DOMAINE TECHNIQUE

Le domaine technique de l'invention est l'observation d'un objet par une source de lumière, l'objectif étant d'illuminer l'objet selon un motif d'illumination prédéterminé. L'objet peut être un échantillon ou une scène.

### ART ANTERIEUR

Certaines modalités d'observation d'un échantillon mettent en œuvre une source de lumière, configurée pour illuminer un échantillon. Il s'agit par exemple de modalités d'imagerie de fluorescence, ou d'imagerie d'absorbance d'un échantillon. Dans ce type de modalité, il est préférable d'illuminer l'échantillon de la façon la plus homogène possible. Un exemple de modalité mettant en œuvre la fluorescence est la PCR (Polymerase Chain Reaction - Réaction en Chaine Polymérase) quantitative.

Afin d'obtenir une illumination homogène, on peut disposer un diffuseur entre la source de lumière et l'échantillon. Cependant, l'homogénéisation est difficilement contrôlable. De plus, le recours à un diffuseur ne permet qu'une homogénéisation, sans possibilité de définir une autre distribution spatiale de l'illumination.

EP1751972 décrit un modulateur permettant de moduler spatialement l'intensité de la lumière atteignant un capteur d'image, de façon à obtenir une illumination uniforme du capteur d'image. Le modulateur est ajusté en fonction de l'image formée par le capteur d'image. La mise en œuvre d'un tel modulateur suppose le recours à un moyen de séparation de la lumière, de façon à diriger une partie de la lumière vers le capteur d'image, et une autre partie vers l'échantillon observé. Cela suppose un réglage. Cela nuit également à la compacité de l'ensemble.

L'invention vise à définir un dispositif compact de modulation, permettant de moduler spatialement un faisceau lumineux se propageant selon un axe de propagation, la modulation spatiale étant effectuée dans un plan perpendiculaire, ou sensiblement perpendiculaire, à l'axe de propagation, selon un motif prédéterminé.

### EXPOSE DE L'INVENTION

Un premier objet de l'invention est un dispositif d'illumination d'un objet, le dispositif étant configuré pour être éclairé par une source de lumière, la source de lumière émettant une lumière dans une bande spectrale d'émission, le dispositif comportant :
- un photodétecteur pixelisé, comportant des pixels de détection répartis selon une surface de détection;
- un modulateur, formé d'une matrice de pixels de modulation, interposé entre la source de lumière et le photodétecteur pixelisé, chaque pixel de modulation comportant un matériau dont une propriété optique varie en fonction d'une commande électrique appliquée audit pixel de modulation;
- une unité de commande, configurée pour activer chaque pixel de modulation en fonction d'une intensité de lumière détectée par les pixels de détection, de façon à modifier une transmission de la lumière d'au moins un pixel de modulation ;
le dispositif étant caractérisé en ce que :
- la surface de détection transmet une partie de la lumière dans la bande spectrale d'émission, de façon que la lumière transmise par le photodétecteur pixelisé illumine l'objet ;
- de façon que le dispositif est configuré pour être disposé entre la source de lumière et l'objet.

Chaque pixel de détection peut transmettre au moins 50%, ou au moins 60%, ou au moins 70% de la lumière dans la bande spectrale d'émission.

Deux pixels de détection adjacents peuvent être espacés l'un de l'autre, de façon à ménager un espace libre, sur la surface de détection, entre lesdits pixels adjacents, l'espace libre transmettant au moins 50% ou au moins 60%, ou au moins 70% de la lumière dans la bande spectrale d'émission.

Chaque pixel de modulation peut être configuré pour modifier une direction de polarisation de la lumière en fonction de la commande électrique appliquée audit pixel de modulation, le dispositif comportant un polariseur de sortie interposé entre le modulateur et le photodétecteur pixelisé.

Le dispositif peut comporter un polariseur d'entrée, le dispositif étant tel que le modulateur est interposé entre le polariseur d'entrée et le polariseur de sortie.

Chaque pixel de modulation peut être configuré pour modifier une absorbance de la lumière émise par la source de lumière en fonction de la commande électrique appliquée audit pixel de modulation.

L'unité de commande peut être configurée pour :
a) mémoriser un motif d'illumination ;
b) recevoir un signal de détection représentant une intensité de lumière détectée par les pixels du photodétecteur ;
c) activer chaque pixel de modulation en fonction de l'intensité de lumière détectée par les pixels du photodétecteur et du motif d'illumination mémorisé.

Le photodétecteur pixelisé et le modulateur peuvent être fixés l'un à l'autre.

Le photodétecteur pixelisé et le modulateur peuvent être disposés au contact l'un de l'autre ou à une distance inférieure à 1 cm l'un de l'autre.

L'invention sera mieux comprise à la lecture de l'exposé des exemples de réalisation présentés, dans la suite de la description, en lien avec les figures listées ci-dessous.

### FIGURES

La figure 1 schématise une mise en œuvre du dispositif selon l'invention.
La figure 2 représente les pixels d'un photodétecteur du dispositif selon un premier mode de réalisation.
La figure 3A schématise un profil d'illumination, selon un axe, sans mise en œuvre de l'invention.
La figure 3B schématise un exemple de profil d'illumination obtenu en mettant en œuvre l'invention.
La figure 3C montre un autre exemple de profil d'illumination obtenu en mettant en œuvre l'invention.
Les figures 4A à 4L illustrent des étapes de fabrication d'un dispositif selon le premier mode de réalisation de l'invention.
La figure 5 montre un exemple de remplissage de la matrice de cristaux liquides.
La figure 6A montre des électrodes permettant un adressage de pixels de détection.
La figure 6B montre des électrodes permettant un adressage de pixels de modulation.
La figure 7 montre un mode de réalisation de l'invention
La figure 8 montre une variante de réalisation de l'invention.
La figure 9 montre une autre variante de réalisation de l'invention.
La figure 10 représente les principales étapes mises en œuvre par l'unité de commande.
Les figures 11A à 11D représentent différentes configurations de connexion de pixels de détection.

### EXPOSE DE MODES DE REALISATION PARTICULIERS

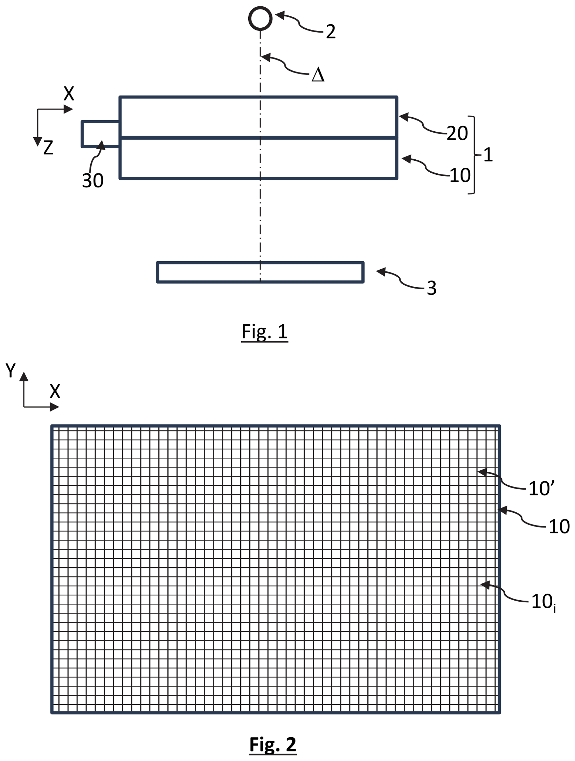

La figure 1 montre une vue d'ensemble d'un dispositif 1 selon l'invention. Le dispositif est destiné à être interposé entre une source de lumière 2 et un objet 3. Le dispositif comporte un photodétecteur pixelisé 10 et un modulateur 20. Dans cet exemple, le modulateur est formé par une matrice de cristaux liquides.

L'objet peut être un échantillon, par exemple un échantillon biologique, que l'on souhaite analyser. Il peut également s'agir d'un écran ou d'un autre type d'objet.

Le modulateur 20 comporte des pixels de modulation 20ᵢ arrangés selon une matrice. Le photodétecteur pixelisé comporte des pixels de détection 10ᵢ, également agencés de façon matricielle. Dans l'exemple décrit, il y a autant de pixels de détection que de pixels de modulation. L'indice i est un entier désignant une coordonnée spatiale de chaque pixel de détection et de chaque pixel de modulation. 1≤i≤l, l étant le nombre de pixels de modulation et de détection. Chaque pixel de modulation est disposé face à un pixel de détection.

De préférence, le photodétecteur pixelisé 10 et le modulateur 20 sont solidaires d'un de l'autre. Ils sont de préférence fixés l'un à l'autre, de façon à minimiser une distance entre les pixels de détection du photodétecteur et les cristaux liquides élémentaires. La distance entre le photodétecteur 10 et le modulateur 20 est de préférence inférieure à 1 cm. Dans cet exemple, le photodétecteur 10 est au contact du modulateur 20 ce qui correspond à la configuration préférée.

Chaque pixel de modulation 10ᵢ permet de moduler une intensité de la lumière détectée par un pixel de détection 10ᵢ lorsque la source de lumière éclaire le dispositif.

La figure 2 schématise les pixels de détection 10ᵢ du photodétecteur 10. Les pixels de détection sont répartis selon une surface de détection 10'.

La source de lumière 2 émet une lumière qui se propage autour d'un axe de propagation Δ parallèle à un axe transversal Z. Le modulateur 20 et le photodétecteur pixelisé 10 sont agencés de préférence perpendiculairement, ou sensiblement perpendiculairement à l'axe transversal, parallèlement à un plan de détection s'étendant selon un axe latéral X et un axe longitudinal Y, perpendiculaire à l'axe latéral X. Par sensiblement perpendiculairement, il est entendu perpendiculaire à ± 20° ou ± 30° près.

La source de lumière peut émettre dans une bande spectrale d'émission, dans le visible, ou dans l'infra-rouge, par exemple l'infrarouge court, s'étendant entre 1 et 3 µm, ou du moyen infrarouge, s'étendant entre 3 et 5 µm, ou encore de l'infrarouge long, s'étendant entre 8 et 20 µm. Dans l'exemple détaillé décrit par la suite, la source de lumière émet dans le spectre visible.

Une mise en œuvre de l'invention dans l'infra-rouge est possible, sous réserve d'une adaptation des matériaux utilisés à la transmission de la lumière dans l'infra-rouge.

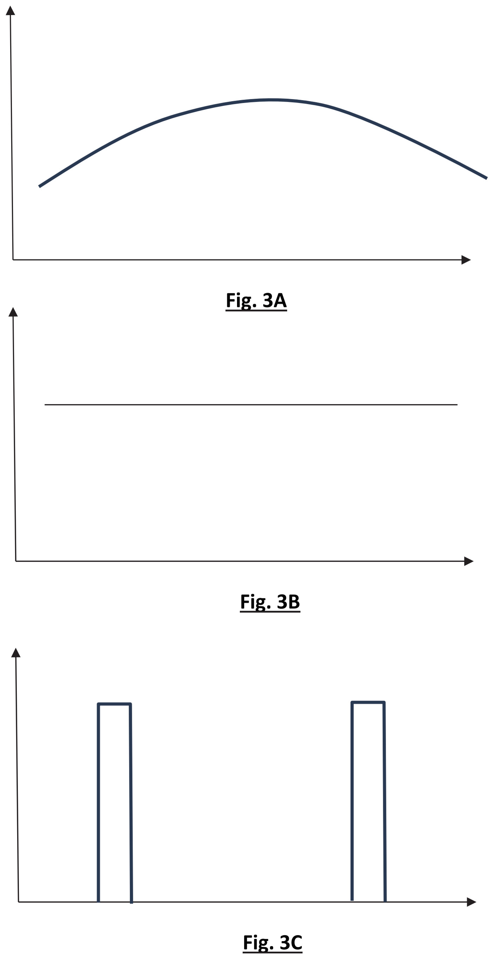

La figure 3A illustre un profil d'une distribution spatiale de l'intensité de la lumière émise par la source de lumière 2, le long d'un axe s'étendant dans le plan XY. On observe que l'intensité lumineuse n'est pas homogène, et est maximale dans une partie centrale, en face de la source de lumière. L'objectif de l'invention est de structurer le faisceau lumineux émis par la source de lumière de façon qu'il définisse, dans un plan perpendiculaire à l'axe de propagation, un motif prédéterminé. Il peut s'agir d'un motif homogène, comme représenté sur la figure 3B, ou d'un motif inhomogène, comme représenté sur la figure 3C. Sur la figure 3C, le faisceau est modulé spatialement de façon à former un anneau. Par motif, on entend une distribution spatiale de la lumière dans un plan parallèle au plan de détection.

Le dispositif comporte une unité de commande 30, reliée au photodétecteur 10 et au modulateur 20. L'unité de commande comporte un microprocesseur, ou autre calculateur, configuré pour analyser l'intensité détectée par chaque pixel 10ᵢ du photodétecteur 10, et pour adresser un signal de commande à chaque pixel de modulation 20ᵢ de façon que l'intensité lumineuse détectée par chaque pixel élémentaire soit spatialement distribuée selon un motif d'illumination préalablement défini et mémorisé.

Les pixels de détection du photodétecteur pixelisé sont répartis selon une surface de détection 10'. Un aspect important de l'invention est que la surface de détection transmet une partie de la lumière émise par la source de lumière, de façon que la lumière transmise par le photodétecteur pixelisé illumine l'objet 3.

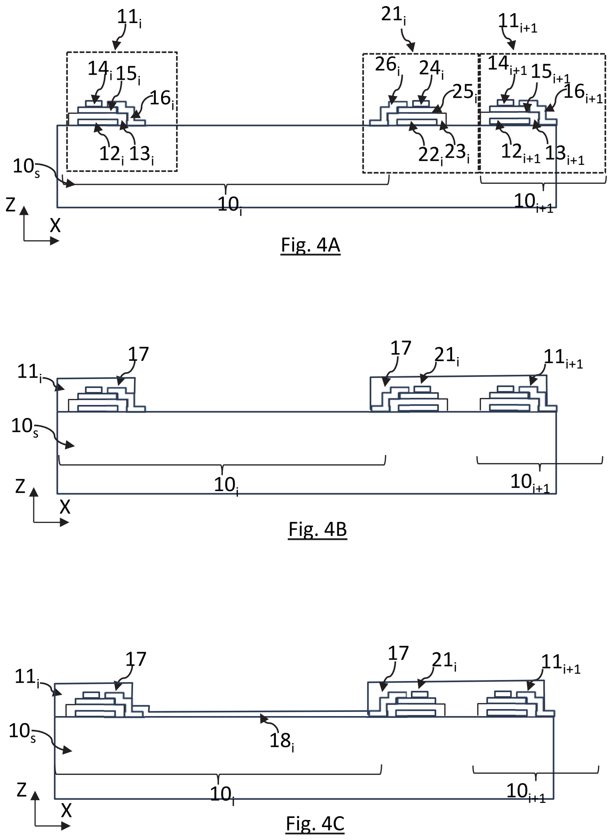

Selon un premier mode de réalisation, décrit en lien avec les figures 4A à 4L, chaque pixel de détection transmet une partie de la lumière à laquelle il est exposé, de préférence au moins 50%, voire au moins 60%, voire au moins 70% ou 80% de la lumière à laquelle il est exposé.

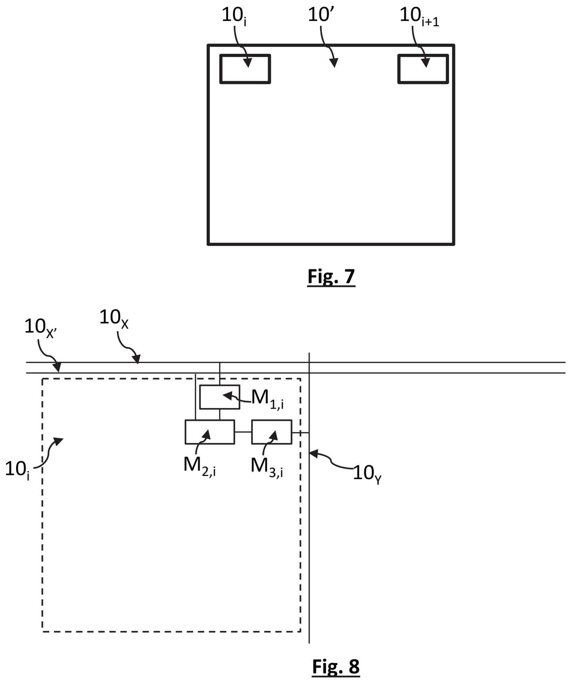

Selon un deuxième mode de réalisation, décrit en lien avec la figure 7, les pixels de détection sont espacés les uns des autres. Entre les pixels, la surface de détection 10' transmet une partie de la lumière dans la bande spectrale d'émission de la source de lumière, de préférence au moins 50%, voire au moins 60%, voire au moins 70% ou 80% de la lumière dans la bande spectrale d'émission de la source de lumière.

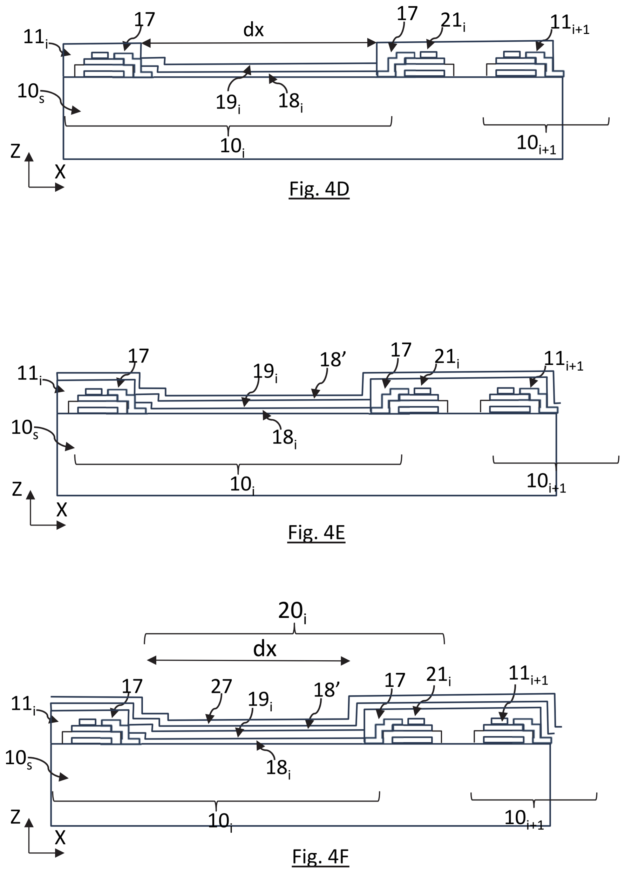

Les figures 4A à 4L décrivent une fabrication d'un exemple de dispositif selon le premier mode de réalisation de l'invention. Les figures 4A à 4E montrent la formation d'un pixel de détection 10ᵢ, et les figures 4F à 4L montrent la formation d'un pixel de modulation 20ᵢ, accouplé au pixel de détection 10ᵢ. Dans cet exemple, le dispositif comporte autant de pixels de détection 10ᵢ que de pixels de modulation 20ᵢ. Le dispositif comporte un support de photodétecteur 10ₛ, sur lequel sont formés les pixels de détection 10ᵢ. Dans l'exemple représenté, chaque pixel de détection 10ᵢ comporte un transistor de pilotage 11ᵢ, destiné à permettre une collecte de porteurs de charges collectés par une électrode collectante, généralement une anode. Dans l'exemple représenté, le transistor de pilotage 11ᵢ est un transistor de type TFT (Thin Film Transistor - Transistor à couche mince), qui est un transistor à effet de champ usuellement utilisé dans les écrans plats, comme les écrans à cristaux liquides ou les écrans OLED (diode électroluminescente organique).

Le support de photodétecteur 10ₛ est transparent dans la bande spectrale d'émission de la source de lumière. Dans cet exemple, la bande spectrale d'émission de la source de lumière est dans le domaine visible. Le support 10ₛ est par exemple en verre.

Le transistor de pilotage 11ᵢ du pixel de détection 10ᵢ est formé d'une grille 12ᵢ, d'une source 14ᵢ et d'un drain 16ᵢ, réalisés dans un matériau conducteur, par exemple un métal. Le transistor de pilotage 11ᵢ comporte un canal 15ᵢ formé d'une couche mince de semi conducteur, par exemple Si, et séparé de la grille par une couche mince d'isolant 13ᵢ, par exemple SiO₂.

Chaque pixel de détection 10ᵢ est associé à un transistor de pilotage 11ᵢ. Sur les figures 4A à 4L, seuls deux transistors de pilotage 11ᵢ et 11ᵢ₊₁ ont été représentés. Le transistor de pilotage 11ᵢ₊₁, associé au pixel de détection adjacent 10ᵢ₊₁ comporte une grille 12ᵢ₊₁, une source 14ᵢ₊₁ et un drain 16ᵢ₊₁. Le transistor de pilotage 11ᵢ₊₁ comporte un canal 15ᵢ₊₁ séparé de la grille par une couche mince d'isolant 13 ᵢ₊₁.

Un transistor de commande 21ᵢ d'un pixel de modulation 20ᵢ est formé sur le support 10ₛ. Il s'agit également d'un transistor de type TFT, de structure analogue au transistor de pilotage 11ᵢ. comportant une grille 22ᵢ, une source 24ᵢ et un drain 26ᵢ. Le transistor de pilotage 21ᵢ comporte un canal 25ᵢ séparé de la grille par une couche mince d'isolant 23ᵢ. Les matériaux formant chaque transistor de commande 21ᵢ peuvent être identiques à ceux composant chaque transistor de pilotage 11ᵢ. Chaque pixel de modulation 20ᵢ est associé à un transistor de pilotage 21ᵢ.

Les transistors de pilotage des pixels de détection 10ᵢ et les transistors de commande des pixels de modulation 20ᵢ sont recouverts d'une couche d'isolant 17, par exemple SiO₂ : cf. figure 4B. L'isolant peut être déposé par évaporation ou dépôt en phase vapeur. La délimitation de la couche d'isolant 17 peut être effectuée par photolithographie et gravure. Une extrémité du drain 16ᵢ de chaque transistor de pilotage 11ᵢ, 11ᵢ₊₁ est libérée, de façon à pouvoir être raccordée à une électrode transparente, comme décrit en lien avec la figure 4C.

Une première électrode 18ᵢ, transparente dans la bande spectrale d'émission, est formée sur le support 10ₛ de façon à être en contact de chaque drain 16ᵢ. Cf. figure 4C. Chaque première électrode transparente 18ᵢ est formée d'un matériau conducteur, par exemple ITO (Indium Tin Oxyde : oxyde d'indium et d'étain) pour le domaine spectral visible. L'épaisseur de chaque première électrode 18ᵢ peut être comprise entre 10 nm et 100 nm. La première électrode 18ᵢ est pixelisée : chaque pixel de détection 10ᵢ comporte une première électrode 18ᵢ séparée de la première électrode des autres pixels de détection.

Une couche du matériau photoconducteur 19ᵢ est déposée sur chaque première électrode 18ᵢ. Cf. figure 4D. Par matériau photoconducteur, on entend un matériau dont la conductivité électrique augmente lorsqu'il est exposé à la lumière. Le matériau photoconducteur est destiné à former des porteurs de charge sous l'effet d'une illumination, dans la bande spectrale d'émission de la source de lumière. Il peut par exemple s'agir d'un matériau semi-conducteur organique, par exemple un polymère semi-conducteur, par exemple P3HT poly(3-hexylthiophène), qui peut être déposé par voie liquide. Il peut également s'agir d'une phtalocyanine, telle que ZnPC (phtalocyanine de Zinc), qui peut être déposé par évaporation.

L'épaisseur du matériau photoconducteur 19ᵢ déposé au niveau de chaque pixel de détection 10ᵢ est ajustée de façon à permettre une absorption suffisante de la lumière incidente, de façon à former un signal de détection exploitable, tout en permettant de transmettre une fraction la plus élevée possible de lumière incidente. Ainsi, l'épaisseur du matériau est configurée pour permettre une transmission d'au moins 50%, voire 60%, voire 70%, voire 80% de la lumière incidente. La fraction de lumière non transmise est absorbée par le matériau photoconducteur 19ᵢ de façon à former le signal de détection du pixel 10ᵢ. D'une façon générale, l'épaisseur du matériau photoconducteur est comprise entre 50 nm et 500 nm.

Une première contre électrode 18' est formée sur le matériau photoconducteur 19ᵢ de chaque pixel de détection 10ᵢ. Cf. figure 4E. Tandis que chaque première électrode 18ᵢ est pixelisée, la première contre-électrode 18' est commune à l'ensemble des pixels de détection. La première contre-électrode 18' est formée d'un matériau conducteur transparent dans la bande spectrale d'émission, par exemple ITO dans la bandes spectrale visible.

Les étapes représentées sur les figures 4A à 4E sont mises en œuvre sur le support 10ₛ de façon à former les pixels de détection 10ᵢ. Chaque pixel de détection peut s'étendre selon un côté *dx* supérieur à la longueur d'onde, par exemple supérieur à 1 µm et de préférence supérieur à quelques µm, typiquement entre 10 µm et 500 µm de côté.

On décrit à présent une formation d'un modulateur 20, comportant une matrice de cristaux liquides élémentaires, ou pixels de modulation, respectivement couplés aux pixels de détection 10ᵢ.

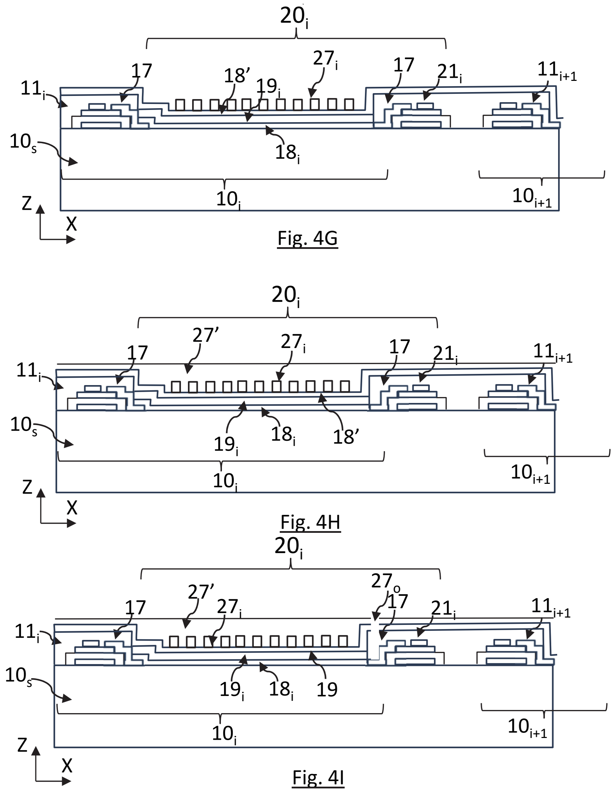

Dans le mode de réalisation décrit, chaque pixel de modulation 20ᵢ est configuré pour modifier une direction de polarisation de la lumière, en amont d'un pixel de détection, cela afin de moduler l'intensité du signal détecté par le pixel de détection. Par amont, on entend selon la direction de propagation de la lumière émise par la source. Le dispositif comporte un polarisateur de sortie 27ᵢ, en aval de chaque pixel de modulation 20ᵢ. Le polarisateur de sortie est formé d'un film de matériau métallique 27, qui est déposé contre la première contre-électrode 18'. Le matériau métallique est par exemple de l'aluminium ou de l'argent. L'épaisseur du film métallique 27 est comprise entre 50 et 500 nm. Cf. figure 4F. Le film métallique 27 fait l'objet d'une structuration, de façon à former, face à chaque pixel de détection 10ᵢ, le polariseur 27ᵢ, prenant ici la forme d'une grille, dont le pas est typiquement compris entre 50 nm et 500 nm. Cf. figure 4G. La grille peut être dimensionnée par une méthode de simulation électromagnétique, basée sur des algorithmes de type RCWA (Rigorous Coupled Wave Analysis) ou FDTD (Finite Difference Time Domain). On dépose ensuite une couche isolante 27', par exemple SiO₂, sur le film métallique structuré 27, de façon à obtenir le polariseur 27ᵢ. Cf. figure 4H. La couche isolante 27' est par exemple déposée par évaporation.

Une ouverture 27ₒ est ensuite formée à travers la couche isolante, face à chaque drain 26ᵢ de chaque transistor 21ᵢ. Cf. figure 4I.

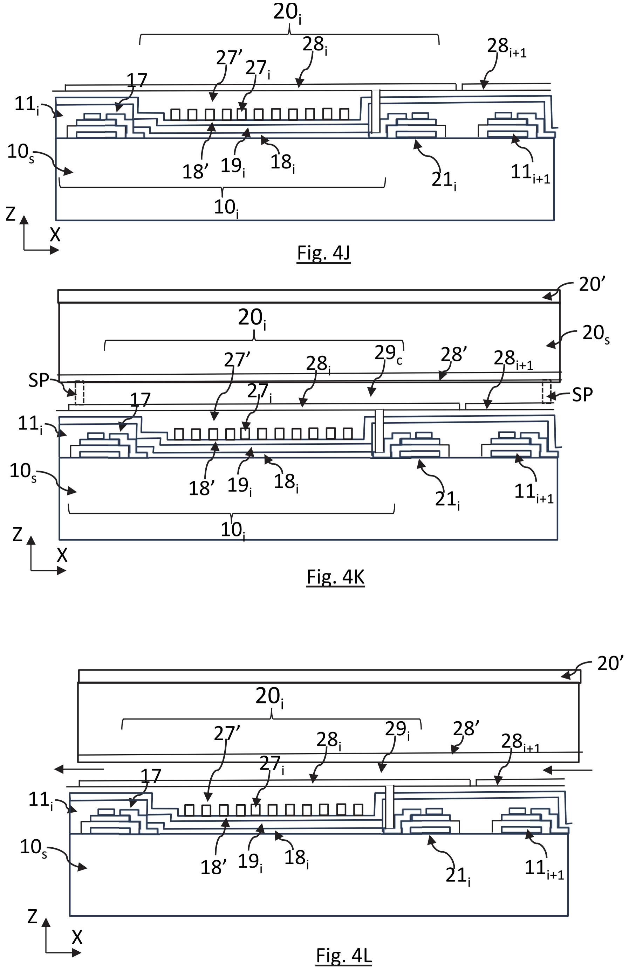

On réalise ensuite un dépôt de deuxièmes électrodes 28ᵢ, face à chaque pixel de détection 10ᵢ. Cf. figure 4J. De même que la première électrode 18ᵢ ou de la première contre électrode 18', chaque deuxième électrode 28ᵢ est formée d'un matériau conducteur et transparent dans la bande spectrale d'émission de la source de lumière. Chaque deuxième électrode 28ᵢ remplit chaque ouverture 27ₒ, de façon à contacter le drain 26ᵢ de chaque transistor 21ᵢ.

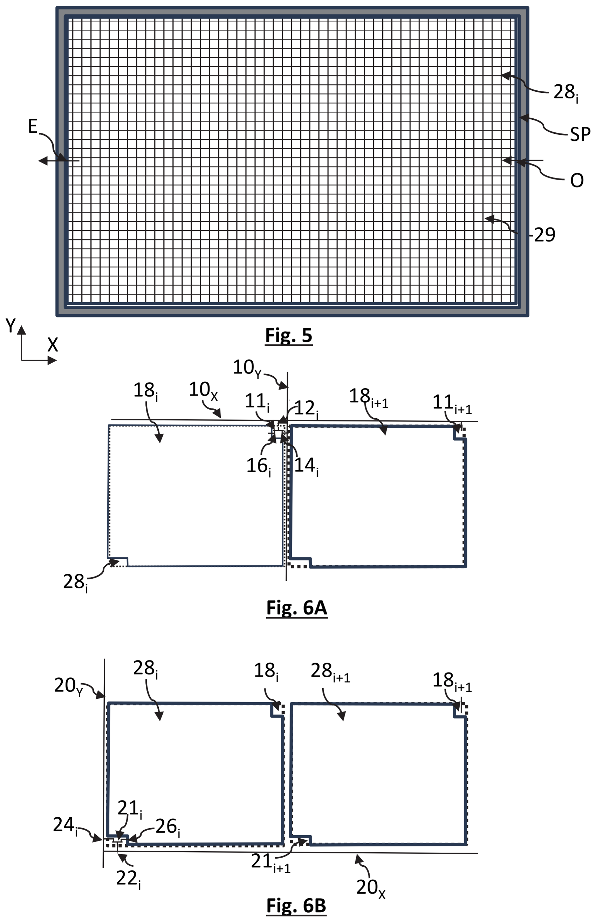

Sur la figure 4K, on a représenté une formation d'une cavité vide 29_{c}, qui est obtenue en disposant, autour de l'empilement résultant des étapes 4A à 4J, un espaceur SP. La figure 5 schématise l'espaceur SP disposé autour de l'ensemble formé par les deuxièmes électrodes 28ᵢ, dans le plan XY. L'espaceur peut être un cordon de scellement étanche, d'épaisseur comprise entre 2 µm et 4 µm dans le domaine spectral visible. Dans l'infra-rouge, l'épaisseur peut être de 6 ou 7 µm jusqu'à une longueur d'onde de 8000 nm, et davantage au-delà, par exemple jusqu'à 12 µm. Le cordon est destiné à permettre un accolage avec un capot 20ₛ. Le capot 20ₛ est un capot transparent, et délimité d'une part par une deuxième contre-électrode 28', et d'autre part par un polariseur d'entrée 20^{'}. Le capot 20ₛ sert de support à la deuxième contre-électrode 28', ainsi qu'au polariseur d'entrée 20'. Le capot 20ₛ permet, avec le cordon de scellement formant l'espaceur Le périphérique SP, de délimiter la cavité 29_{c}, cette dernière étant destinée à être remplie par un matériau à cristaux liquides 20. Le recours au polarisateur d'entrée 20^{'} n'est pas nécessaire si la source émet une lumière polarisée, ou si un filtre polarisant est disposé entre la source de lumière 2 et le dispositif 1.

L'espaceur SP dispose d'une ouverture O permettant une injection du matériau à cristaux liquides 29, et d'un évent E pour l'évacuation d'air lors du remplissage de la cavité. Les familles de cristaux liquides utilisables pour répondre au besoin de l'inventions sont les familles des smectiques, des nématiques et des cholestériques. L'épaisseur de la cavité est de quelques µm lorsque la source de lumière émet dans le domaine spectral visible, par exemple entre 2 µm et 4µm, comme précédemment décrit en lien avec l'épaisseur du cordon de scellement, et davantage dans l'infra-rouge.

La figure 4L montre le dispositif après remplissage de la cavité 29_{c} par le matériau à cristaux liquide. La portion de matériau à cristaux liquides face à chaque deuxième électrode 28ᵢ est désignée par la référence 29ᵢ.

Chaque pixel de modulation 20ᵢ mesure par exemple entre 10 µm et 500 µm de côté. Dans l'exemple représenté chaque pixel de modulation 20ᵢ a la même taille qu'un pixel de détection 10ᵢ. Ainsi, chaque pixel de modulation 20ᵢ est disposé en regard d'un pixel de détection 10ᵢ.

Les figures 6A et 6B montrent une configuration possible d'électrodes d'adressage, permettant une connexion électrique avec les transistors de pilotage 11ᵢ et les transistors de commande 21ᵢ. La première contre-électrode 18' et la deuxième contre-électrode 28' sont portées à un potentiel fixe, par exemple une masse.

Sur la figure 6A, on a représenté une première électrode de polarisation 10_{X} formant une ligne et une électrode de lecture 10_{Y} formant une colonne. Pour chaque pixel de détection 10ᵢ d'une même ligne, parallèlement à l'axe X, l'électrode 10_{X} est reliée à la grille 12ᵢ du transistor de pilotage 11ᵢ. L'électrode de lecture 10_{Y} est reliée à la source 14ᵢ du transistor de pilotage 11ᵢ, tandis que le drain 16ᵢ du transistor de pilotage 11ᵢ est connecté à la première électrode 18ᵢ du pixel de détection 10ᵢ. Lorsque l'électrode 10_{X} est activée, la charge collectée par la première électrode 18ᵢ est transférée, via le drain 14ᵢ, vers l'électrode de lecture 10_{Y}. . La charge collectée peut être lue par un amplificateur, relié à l'électrode de lecture 10_{Y}. Il peut par exemple s'agir d'un amplificateur capacitif de trans-impédance CTIA (Charge Trans-Impedance Amplifier). Le potentiel de l'électrode 18ᵢ atteint sensiblement le potentiel de l'électrode de lecture 10_{Y, ce} qui réalise un reset (réinitialisation) du pixel de détection 10ᵢ. Un tel agencement permet une lecture simultanée des signaux de détection des pixels de détection 10ᵢ d'une même ligne par chaque électrode colonne 10_{Y}. La forme de chaque pixel de détection 10ᵢ est adaptée de façon à permettre la disposition du transistor de pilotage 11ᵢ et de la deuxième électrode 28ᵢ.

Sur la figure 6B, on a représenté une électrode de polarisation 20_{X} formant une ligne et une électrode 20_{Y} formant une colonne. Pour chaque pixel de modulation 20ᵢ d'une même ligne, l'électrode 20_{X} est reliée à la grille 22ᵢ du transistor d'actionnement 21ᵢ. L'électrode 20_{Y} est reliée à la source 24ᵢ du transistor d'actionnement 21ᵢ, tandis que le drain 26ᵢ du transistor d'actionnement 21ᵢ est connecté à la deuxième électrode 28ᵢ. Cela permet, via le transistor de commande 21ᵢ, une activation simultanée des pixels de modulation 20ᵢ d'une même ligne par chaque électrode 20_{X}. La forme de chaque pixel de modulation 20ᵢ est adaptée de façon à permettre la disposition du transistor d'actionnement 21ᵢ et de la première électrode 18ᵢ.

Selon une possibilité, l'électrode 10_{Y} et l'électrode 20_{Y} sont communes, et sont successivement utilisées pour la lecture du signal de détection de pixels de détection ou pour l'actionnement de pixels de modulation. Il en résulte un allongement du temps de trame, puisque la lecture du signal de détection et l'actionnement du pixel de modulation lui faisant face sont effectués successivement.

La direction de polarisation des polariseurs d'entrée et de sortie dépend de l'aptitude des cristaux liquides à polariser la lumière. Lorsque les polariseurs d'entrée et de sortie sont orientés selon une même direction de polarisation, l'activation des cristaux liquides d'un pixel de modulation permet de modifier la direction de polarisation de la lumière, ce qui réduit la lumière transmise vers le pixel de détection disposé à l'aplomb du pixel de modulation.

Lorsque les polariseurs d'entrée et de sortie sont orientés selon des directions de polarisation croisées, en l'absence d'activation des cristaux liquides dans un pixel de modulation, aucune lumière n'est transmise. L'activation des cristaux liquides modifie la polarisation, ce qui augmente la lumière transmise vers le pixel de détection disposé à l'aplomb du pixel de modulation.

Le recours à un polariseur d'entrée n'est pas nécessaire. En effet, la source de lumière peut être une source de lumière laser, ou une source de lumière couplée à un filtre polarisant. Ainsi, la lumière parvient au dispositif en étant polarisée selon une direction de polarisation initiale. De préférence, la direction de polariseur de sortie est soit parallèle, soit perpendiculaire à la direction de polarisation initiale.

Dans l'exemple précédemment décrit, chaque pixel de modulation a la même taille qu'un pixel de détection. La disposition des pixels de modulation et de détection est telle que chaque pixel de modulation coïncide avec un pixel de détection.

La figure 7 représente une variante selon laquelle deux pixels de détection 10ᵢ, 10ᵢ₊₁ adjacents sont espacés les uns des autres, de façon à ménager un espace libre, sur la surface de détection 10', entre lesdits pixels adjacents, l'espace libre transmettant au moins 50% ou au moins 60%, ou au moins 70% de la lumière à laquelle il est exposé. Selon cette variante, les pixels de détection peuvent être opaques. Il est préférable que les pixels de détection 10ᵢ occupent une surface réduite de la surface de détection, par exemple moins de 10% ou moins de 20% ou moins de 30% de la surface de détection. Selon ce mode de réalisation, les pixels de détection peuvent être de type « smart pixels » tels que décrits dans EP33811060 ou FR3125358. La taille de chaque pixel de détection 10ᵢ peut alors être réduite, par exemple entre 1 µm et 10 µm, alors que la taille des pixels de modulation 20ᵢ est par exemple comprise entre 10 µm et 500 µm. Ainsi, chaque pixel de détection s'étend selon une surface de moins de 10% ou moins de 20% de la surface de chaque pixel de modulation. La partie complémentaire de la surface de détection 10' est transparente, comme précédemment décrit. Cette variante permet de tirer profit de la bonne sensibilité de détection des pixels de type « smart pixels », ce type de pixels présentant un faible courant d'obscurité (typiquement < 1 pA/cm²), et un rendement de détection élevé.

Selon une variante, les pixels de détection ne sont pas commandés par un transistor de type TFT, mais par un circuit de lecture et d'adressage utilisant trois transistors de type CMOS (Complementary Metal-Oxide Semiconductor), représenté sur la figure 8 :
- un transistor de réinitialisation M_{1,i}, permettant de connecter la première électrode 18ᵢ de chaque pixel de détection 10ᵢ à un potentiel de référence. Le potentiel de référence est par exemple porté par une électrode de référence 10_{X} alimentant les pixels d'une même ligne, le long de l'axe X ;
- un transistor de sélection M_{2,i}, activé par une électrode d'activation 10_{X'}, activant les pixels de détection d'une même ligne 10ᵢ. L'activation de chaque transistor de sélection permet de transmettre le signal de détection résultant du pixel vers un transistor de sortie M_{3,i}.
- le transistor de sortie M_{3,i}, dont la grille est reliée au drain du transistor de sélection M_{2,i}, et dont la source est reliée à une électrode colonne de lecture 20_{Y}. Le transistor de sortie fonctionne en mode suiveur.

Par rapport à la configuration précédemment décrite, une telle configuration impose de disposer de deux électrodes disposées le long de chaque ligne : l'électrode de référence 10_{X} portant le potentiel de référence et l'électrode d'activation 10_{X}. L'avantage de cette configuration est un moindre bruit de lecture, ce qui permet d'augmenter la sensibilité du pixel.

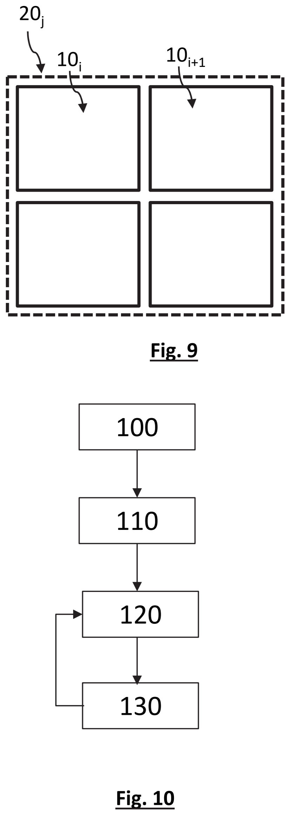

Dans l'exemple qui précède, chaque pixel de détection 10ᵢ coïncide avec un pixel de modulation 20ᵢ, ce qui correspond à une configuration optimale : le nombre de pixels de modulation est identique au nombre de pixels de détection. Cependant, le nombre de pixels de modulation peut être plus faible que le nombre de pixels de détection. Ainsi, un pixel de modulation peut être disposé en face de plusieurs pixels de détection. Une telle possibilité est illustrée sur la figure 9. Dans l'exemple représenté sur la figure 9, chaque pixel de modulation 20ⱼ adresse quatre pixels de détection 10ᵢ adjacents. Dans cet exemple, un indice j est associé à chaque pixel de modulations, avec 1≤j≤J et J < I. J est un entier représentant le nombre de pixels de modulation.

Dans les exemples qui précèdent, les cristaux liquides permettent de modifier la direction de polarisation de la lumière lorsqu'ils sont activés. Selon une autre possibilité, chaque pixel de modulation 20ᵢ est formé d'un matériau électro-chromique, dont l'absorbance, dans la bande spectrale d'émission de la source de lumière, varie en fonction d'une polarisation appliquée. Il peut par exemple s'agir de dioxyde de tungstène, de dioxyde de titane ou d'un polymère conducteur.

La figure 10 schématise les opérations mises en œuvre par l'unité de traitement 30, lors du fonctionnement du dispositif.

Au cours d'une étape 100, l'unité de commande mémorise un motif d'illumination à produire. Des exemples de motifs ont été décrits en lien avec les figures 3A à 3C.

Au cours d'une étape 110, la source de lumière est activée.

Au cours d'une étape 120, le photodétecteur 20 génère un motif d'illumination produit par la source de lumière, à travers le modulateur 10.

Au cours d'une étape 130, l'unité de commande compare le motif d'illumination détecté par le photodétecteur 20 avec le motif d'illumination mémorisé. En fonction de la comparaison, les pixels de modulation sont activés, de façon à moduler l'intensité de la lumière parvenant à chaque pixel de modulation.

Les étapes 120 à 130 peuvent être réitérées de façon continue, ou jusqu'à ce que le motif d'illumination soit considéré comme fidèle au motif mémorisé. Cela permet d'avoir un dispositif d'illumination asservi au motif d'illumination mémorisé.

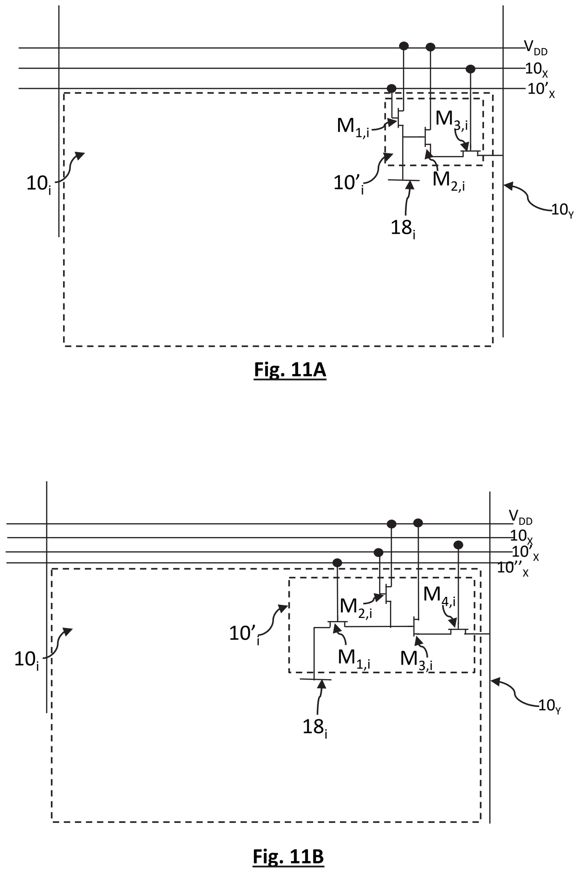

Les figures 11A à 11D illustrent d'autres exemples de connexions de pixels de détection pouvant être mises en œuvre.

La figure 11A correspond à une configuration dite 3T, car chaque pixel de détection 10ᵢ est commandé par trois transistors M_{1,i} , M_{2,i} et M_{3,i} disposés sur une puce de connexion 10'ᵢ. La puce de connexion est alimentée par une alimentation V_{DD}, une électrode de commande 10_{X} et une électrode de reset (réinitialisation) 10'x. Le transistor M_{2,i} est un transistor, fonctionnant en mode suiveur, transférant le potentiel de l'électrode 18ᵢ du pixel 10ᵢ vers le drain du transistor M_{3,i}. Sous l'effet d'une activation par une électrode de sélection 10_{X}, on obtient une égalisation de la tension entre le drain et la source du transistor M_{3,i}. Une impulsion adressée par l'électrode de reset permet de réinitialiser le potentiel de l'électrode 18ᵢ suite à une lecture à travers le transistor de reset M_{1,i}.

La figure 11B correspond à une configuration dite 4T, car chaque pixel de détection 10ᵢ est commandé par quatre transistors M_{1,i} , M_{2,i}, M_{3,i} et M_{4,i} disposés sur une puce de connexion 10'ᵢ. La puce de connexion 10'ᵢ est alimentée par une alimentation V_{DD}, une électrode de commande 10_{X}, une électrode de reset (réinitialisation) 10'_{X} et une électrode de transfert 10"_{X}. Le transistor M_{1,i} est un transistor de transfert, transférant les charges accumulées dans l'électrode 18ᵢ du pixel 10ᵢ vers un nœud flottant, stockant temporairement les charges accumulées sous l'effet d'une impulsion dans l'électrode de transfert 10"_{X}. Le transistor M_{2,i} est un transistor de réinitialisation, permettant de réinitialiser le potentiel du nœud avant le transfert de charge. Le transistor M_{3,i} est un transistor suiveur, permettant un report du potentiel du nœud flottant, éventuellement avec amplification, vers le transistor de lecture M_{4,i}, de dernier étant commandé par l'électrode de commande 10_{X} de façon à se décharger vers l'électrode de lecture 10_{Y}. La configuration 4T permet une lecture du signal de chaque pixel avec un bruit de lecture réduit. Elle est cependant plus encombrante que la structure 3T présentée sur la figure 11A et suppose une ligne de commande supplémentaire, en l'occurrence l'électrode de transfert 10"_{X}.

Les architectures représentées sur les figures 11A et 11B peuvent fonctionner sur une un pixel de détection de grande surface, transparent, ou sur un pixel de détection de petite surface, opaque. Lorsqu'on met en œuvre des pixels de détection de grande surface, la nécessité d'une certaine transparence à l'égard des photons incidents réduit la sensibilité par unité de surface. La sensibilité surfacique réduite est compensée par une surface de détection étendue. Une alternative est de disposer d'un pixel de détection opaque, plus sensible, de petite surface. La sensibilité est alors concentrée sur une petite surface.

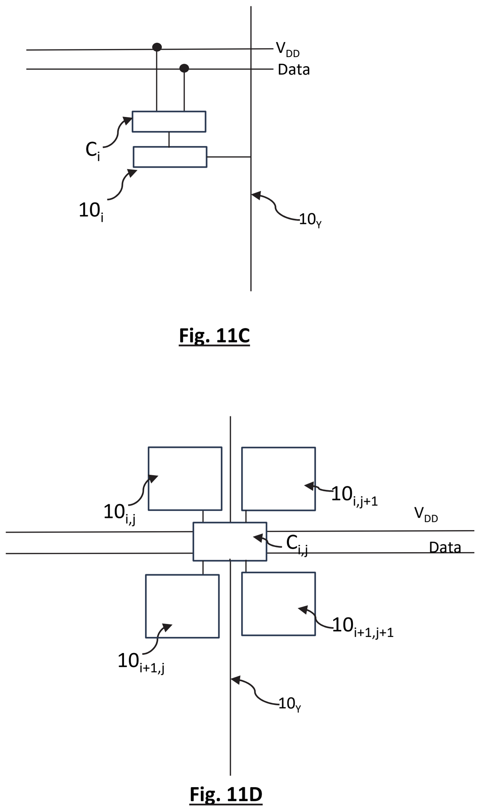

La figure 11C décrit une configuration dans laquelle chaque pixel de détection 10ᵢ est commandé par un contrôleur Cᵢ, ce dernier étant alimenté par une ligne d'alimentation V_{DD} et une ligne de données Data, qui transporte un signal de commande. Le contrôleur permet un pilotage d'une puce 10'ᵢ de connexion de chaque pixel 10ᵢ, en étant piloté par le signal de commande. La puce de connexion 10'ᵢ peut être telle que décrite en lien avec les figures 11A et 11B. Ainsi, le contrôleur permet la gestion de chaque transistor de la puce de connexion 10'ᵢ. Le contrôleur est configuré pour effectuer une démodulation du signal de commande, de façon à piloter la lecture et la réinitialisation du pixel auquel il est relié.

La figure 11D illustre une mutualisation d'un contrôleur C_{i,j}, ce dernier étant alimenté par une ligne d'alimentation V_{DD} et une ligne de données Data. Le contrôleur C_{i,j} permet un pilotage de puces de connexion 10'_{i,j}, 10'_{i,j+1} , 10'_{i+1,j} , 10'_{i+1,j+1} respectivement associées à quatre pixels 10_{i,j} , 10_{i,j+1} , 10_{i+1,j} , 10_{i+1,j+1}, en étant piloté par le signal de commande. Les puces de connexion peuvent être telle que décrites en lien avec les figures 11A et 11B. De même que dans la configuration représentée sur la figure 11C, le contrôleur permet la gestion de chaque transistor des puces de connexion 10'_{i,j} , 10'_{i,j+1} , 10'_{i+1,j} , 10'_{i+1,j+1.}Le contrôleur est configuré pour effectuer une démodulation du signal de commande, de façon à piloter la lecture et la réinitialisation de chaque pixel 10_{i,j} , 10_{i,j+1} , 10_{i+1,j} , 10_{i+1,j+1}auquel il est relié.

## Revendications

1. Dispositif d'illumination d'un objet, le dispositif étant configuré pour être éclairé par une source de lumière, la source de lumière émettant une lumière dans une bande spectrale d'émission, le dispositif comportant :
- un photodétecteur pixelisé (10) , comportant des pixels de détection (10ᵢ) répartis selon une surface de détection (20');
- un modulateur (20), formé d'une matrice de pixels de modulation (20ᵢ), interposé entre la source de lumière et le photodétecteur pixelisé, chaque pixel de modulation comportant un matériau dont une propriété optique varie en fonction d'une commande électrique appliquée audit pixel de modulation;
- une unité de commande (30), configurée pour activer chaque pixel de modulation en fonction d'une intensité de lumière détectée par les pixels de détection, de façon à modifier une transmission de la lumière d'au moins un pixel de modulation ;
le dispositif étant **caractérisé en ce que** :
- la surface de détection transmet une partie de la lumière dans la bande spectrale d'émission, de façon que la lumière transmise par le photodétecteur pixelisé illumine l'objet,
- de façon que le dispositif est configuré pour être disposé entre la source de lumière et l'objet.

2. Dispositif selon la revendication 1, dans lequel chaque pixel de détection transmet au moins 50%, ou au moins 60%, ou au moins 70% de la lumière dans la bande spectrale d'émission.

3. Dispositif selon la revendication 1, dans lequel deux pixels de détection adjacents sont espacés l'un de l'autre, de façon à ménager un espace libre, sur la surface de détection, entre lesdits pixels adjacents, l'espace libre transmettant au moins 50% ou au moins 60%, ou au moins 70% de la lumière dans la bande spectrale d'émission.

4. Dispositif selon l'une quelconque des revendications précédentes, dans lequel chaque pixel de modulation est configuré pour modifier une direction de polarisation de la lumière en fonction de la commande électrique appliquée audit pixel de modulation, le dispositif comportant un polariseur de sortie (27ᵢ) interposé entre le modulateur (20) et le photodétecteur pixelisé (10).

5. Dispositif selon la revendication 4 comportant un polariseur d'entrée (20ᵢₙ), le dispositif étant tel que le modulateur (20) est interposé entre le polariseur d'entrée et le polariseur de sortie (27ᵢ).

6. Dispositif selon l'une quelconque des revendications 1 à 3, dans lequel chaque pixel de modulation (10ᵢ) est configuré pour modifier une absorbance de la lumière émise par la source de lumière en fonction de la commande électrique appliquée audit pixel de modulation.

7. Dispositif selon l'une quelconque des revendications précédentes, dans lequel l'unité de commande (30) est configurée pour :
a) mémoriser un motif d'illumination ;
b) recevoir un signal de détection représentant une intensité de lumière détectée par les pixels du photodétecteur ;
c) activer chaque pixel de modulation en fonction de l'intensité de lumière détectée par les pixels du photodétecteur et du motif d'illumination mémorisé.

8. Dispositif selon l'une quelconque des revendications précédentes, dans lequel le photodétecteur pixelisé et le modulateur sont fixés l'un à l'autre.

9. Dispositif selon l'une quelconque des revendications précédentes, dans lequel le photodétecteur pixelisé et le modulateur sont disposés au contact l'un de l'autre ou à une distance inférieure à 1 cm l'un de l'autre.
